# FASCICULE DE BREVET EUROPEEN

(11) **EP 4 257 495 B1**
(45) Date de publication et mention de la délivrance du brevet: **14.01.2026**
(21) Numéro de dépôt: 23194009.9
(22) Date de dépôt: 18.06.2018
(51) Int. Cl.: B66C 13/08, B64D 1/22, B64C 27/82, B64D 9/00, B64D 45/04, B66C 1/10

(54) **DISPOSITIF ET PROCÉDÉ ANTI-GIRATOIRE DE LEVAGE, SUSPENSION ET DÉPLACEMENT D'UNE CHARGE**
VERDREHSICHERUNGSVORRICHTUNG UND VERFAHREN ZUM ANHEBEN, AUFHÄNGEN UND BEWEGEN EINER LAST
ANTI-ROTATION DEVICE AND METHOD FOR LIFTING, SUSPENDING AND MOVING A LOAD

(30) Priorité: 23.06.2017 FR 1755782
(43) Date de publication de la demande: 11.10.2023
(62) Demande divisionnaire de: 18737676.9
(73) Titulaire: RTE RESEAU DE TRANSPORT D'ELECTRICITE, 92073 Paris La Défense Cedex (FR)
(72) Inventeur: OHAYON, David, 13090 Aix en Provence (FR); MOREAU, Stéphane, 92919 Paris La Défense Cedex (FR)
(74) Mandataire: Bonnet, Michel

(56) Documents cités:
- EP-A1- 0 825 106
- DE-A1- 2 356 504
- JP-A- H04 256 686
- JP-A- H10 305 989

## Description

La présente invention concerne un dispositif anti-giratoire de suspension d'une charge sous un engin de levage et de déplacement de cette charge. Elle concerne également un procédé de levage et de déplacement de charge utilisant un tel dispositif anti-giratoire.

Elle s'applique en particulier, mais pas uniquement, au domaine de la construction et de la maintenance de lignes de transmission d'électricité à haute tension dans lesquelles des câbles de transport d'énergie électrique sont montés sur des pylônes successifs. Certaines opérations nécessitent par exemple l'installation et le montage de ces pylônes. Etant donné le poids total d'un pylône et les capacités limitées de levage d'un engin généralement utilisé pour ce type d'opérations, le pylône à installer est conçu en plusieurs tronçons indépendants à monter, voire à emboîter, successivement les uns sur les autres sur le lieu d'installation. Pour ce faire, une fois que les différents éléments ont été amenés à proximité du lieu d'implantation par la route, il est généralement procédé à l'assemblage de chaque tronçon, puis au levage et au déplacement de chaque tronçon à l'aide d'un engin de levage tel qu'un hélicoptère gros porteur auquel est suspendue une élingue à l'extrémité libre de laquelle est fixé le tronçon considéré. Le premier tronçon de pylône est posé au sol et chaque autre tronçon est emboîté sur le précédent. L'une des difficultés de ce genre d'opération est de maîtriser l'orientation de chaque tronçon de pylône au moment de le poser au sol ou sur le précédent, d'où la nécessité de prévoir un dispositif anti-giratoire.

L'invention s'applique plus généralement à tout domaine dans lequel une charge lourde doit être soulevée, déplacée puis déposée avec une bonne maîtrise de son orientation, quel que soit l'engin de levage utilisé (hélicoptère, grue ou autres).

Une première solution généralement préconisée, notamment en matière de pose de tronçons de pylônes, consiste à soulever la charge à l'aide d'une élingue électrique permettant son largage et à prévoir plusieurs cordes de guidage accrochées en partie inférieure de la charge, par exemple quatre cordes aux quatre coins d'une section rectangulaire de partie inférieure de tronçon, maintenues en tension à leurs extrémités libres par des opérateurs au sol lorsque la charge est sur le point d'être déposée. Mais cette solution, nécessitant la présence de personnes à proximité de la charge et de l'engin de levage et de déplacement, s'avère délicate et chronophage. Elle est en outre potentiellement dangereuse, en particulier parce que, pour des raisons de sécurité dans le cas d'un tronçon de pylône, celui doit pouvoir être largué à tout moment par l'hélicoptère en cas de problème rencontré dans la phase généralement très contraignante de dépôt au sol ou sur le tronçon précédemment posé.

Une deuxième solution spécifiquement préconisée dans la pose de tronçons de pylônes consiste à prévoir un hélicoptère conçu pour cette tâche, comportant alors éventuellement ses propres moyens non amovibles de mise en rotation de la charge soulevée. Compte tenu des contraintes de sécurité propres aux hélicoptères, un tel hélicoptère, généralement qualifié de grue volante, doit être très particulier et est par conséquent très onéreux. Il est en outre à usage exclusif de levage.

Une autre solution pourrait consister à contraindre l'orientation de la charge par rapport à l'engin de levage et déplacement à l'aide d'un système d'élingues à plusieurs points de fixation sur l'engin lui-même. C'est par exemple ce qui est préconisé dans le brevet US 6,533,220 B2 pour un levage et déplacement par hélicoptère. Mais si cela peut convenir pour certaines charges pas trop lourdes, par exemple un panier d'intervention dans lequel un opérateur s'installe pour intervenir sur une portion de ligne électrique à haute tension, au-delà d'un certain poids tel que celui d'un tronçon de pylône, cela devient dangereux compte tenu de la contrainte inertielle de la charge exercée sur l'hélicoptère.

Un dispositif anti-giratoire selon le préambule de la revendication 1 est connu du document JP H10 305989 A.

Il peut ainsi être souhaité de prévoir un dispositif anti-giratoire de suspension de charge qui permette de s'affranchir d'au moins une partie des problèmes et contraintes précités.

Il est donc proposé un dispositif anti-giratoire de suspension d'une charge sous un engin de levage et de déplacement de cette charge, comportant un système d'élingue doté d'un élément de fixation à l'engin de levage et de déplacement, comportant en outre une poutre d'écartement, présentant un axe longitudinal principal et un axe transversal de rotation en lacet, cette poutre d'écartement comprenant :
- un système de fixation supérieure au système d'élingue, conçu pour lui permettre d'être suspendue en disposition essentiellement horizontale de son axe longitudinal principal et libre autour de son axe transversal de rotation en lacet sous l'engin de levage et de déplacement à l'aide du système d'élingue,
- un système de fixation inférieure à la charge, conçu pour permettre un entraînement de la charge par la poutre d'écartement autour de son axe transversal de rotation en lacet,
la poutre d'écartement comportant en outre des moyens de propulsion disposés de manière à engager sa rotation sur commande, sélectivement dans un sens ou dans l'autre, autour de son axe transversal de rotation en lacet lorsqu'elle est suspendue à l'engin de levage et de déplacement via le système d'élingue.

Selon l'invention, la poutre d'écartement est pourvue d'un indicateur visuel à au moins trois états visuels différents indiquant un état de fonctionnement d'un asservissement angulaire en lacet de la poutre d'écartement parmi au moins trois états de fonctionnement différents possibles :
- un état dans lequel l'asservissement angulaire en lacet de la poutre d'écartement n'est pas activé,
- un état dans lequel l'asservissement angulaire en lacet de la poutre d'écartement est activé mais en attente d'une consigne angulaire d'asservissement, et
- un état dans lequel l'asservissement angulaire en lacet de la poutre d'écartement est activé et soumis à une consigne angulaire reçue.

Un tel dispositif anti-giratoire autonome présente l'avantage de sécuriser l'opération de pose de charge lourde, en particulier à l'aide d'un hélicoptère, en ne nécessitant pas la présence d'opérateurs au sol dans un voisinage trop proche du lieu de pose. En particulier, le contrôle de la rotation en lacet de la charge par l'intermédiaire de la poutre d'écartement dont l'orientation est elle-même contrôlable, par exemple sur commande à distance ou par programmation, assure une bonne maîtrise de la pose. En outre, la liberté en rotation de la poutre d'écartement autour de son axe transversal de rotation en lacet permet de réduire la transmission à l'engin de levage et de déplacement des moments engendrés par l'inertie de la charge soulevée et déplacée. Enfin, il est simple de configurer un tel dispositif anti-giratoire pour qu'il soit conforme aux normes de sécurité des hélicoptères non spécifiquement conçus pour le déplacement de tronçons de pylônes.

De façon optionnelle, la poutre d'écartement est conçue en trois portions s'étendant longitudinalement :
- une portion centrale comportant des moyens d'alimentation en énergie électrique des moyens de propulsion, et
- deux portions latérales, escamotables contre la portion centrale, comportant des éléments de propulsion par rotation en lacet raccordés électriquement aux moyens d'alimentation de la portion centrale.

De façon optionnelle également, les moyens de propulsion comportent un système d'hélices motorisées disposées aux extrémités longitudinales de la poutre d'écartement.

De façon optionnelle également :
- une première hélice des moyens de propulsion, disposée à une première extrémité de la poutre d'écartement, est activable selon une première rotation, comprise entre 4000 et 6000 tours/mn, permettant une rotation de la poutre d'écartement selon un premier sens de rotation en lacet, et
- une deuxième hélice des moyens de propulsion, disposée à une deuxième extrémité de la poutre d'écartement, est activable selon une deuxième rotation, comprise entre 4000 et 6000 tours/mn, permettant une rotation de la poutre d'écartement selon un deuxième sens de rotation en lacet opposé au premier sens.

De façon optionnelle également, chaque hélice des moyens de propulsion est disposée dans un conduit de carénage essentiellement cylindrique autour d'un axe orthogonal à l'axe longitudinal principal et à l'axe transversal de rotation en lacet de la poutre d'écartement.

De façon optionnelle également, une grille de protection est disposée en entrée et en sortie de chaque conduit de carénage.

De façon optionnelle également, une élingue principale du système d'élingue, destinée à porter l'axe transversal de rotation en lacet de la poutre d'écartement, comporte un émerillon de raccordement, à l'engin de levage et de déplacement ou à la poutre d'écartement, à l'une de ses extrémités.

Il est également proposé un procédé de levage et de déplacement d'une charge à l'aide d'un dispositif anti-giratoire de suspension selon l'invention, comportant les étapes suivantes :
- fixation du système d'élingue du dispositif anti-giratoire de suspension à l'engin de levage et de déplacement,
- fixation du dispositif anti-giratoire de suspension à la charge,
- élévation et déplacement de la charge vers une zone de dépôt à l'aide de l'engin de levage et de déplacement, et
- pendant l'étape d'élévation et de déplacement de la charge, commande des moyens de propulsion de la poutre d'écartement de manière à la maintenir dans une direction de consigne définie autour de l'axe transversal de rotation en lacet par rapport à un référentiel lié, soit à l'engin de levage et de déplacement, soit au sol.

De façon optionnelle, la charge est un tronçon de pylône pour lignes de transport d'électricité par câble et l'engin de levage et de déplacement est un hélicoptère porteur du système d'élingue.

L'invention sera mieux comprise à l'aide de la description qui va suivre, donnée uniquement à titre d'exemple et faite en se référant aux dessins annexés dans lesquels :
- la figure 1 représente schématiquement la structure générale d'un dispositif anti-giratoire de suspension de charge, selon un mode de réalisation de l'invention,
- la figure 2 représente schématiquement et en détail les éléments électromécaniques fonctionnels du dispositif anti-giratoire de la figure 1,
- la figure 3 illustre un arrangement démonté d'une poutre d'écartement du dispositif anti-giratoire de la figure 1,
- la figure 4 illustre les étapes successives d'un procédé de levage et de déplacement d'une charge à l'aide du dispositif anti-giratoire de la figure 1,
- la figure 5 illustre les étapes successives d'un procédé de fonctionnement d'une commande distante du dispositif anti-giratoire de la figure 1, et
- la figure 6 illustre les étapes successives d'un procédé de fonctionnement d'un microcontrôleur du dispositif anti-giratoire de la figure 1.

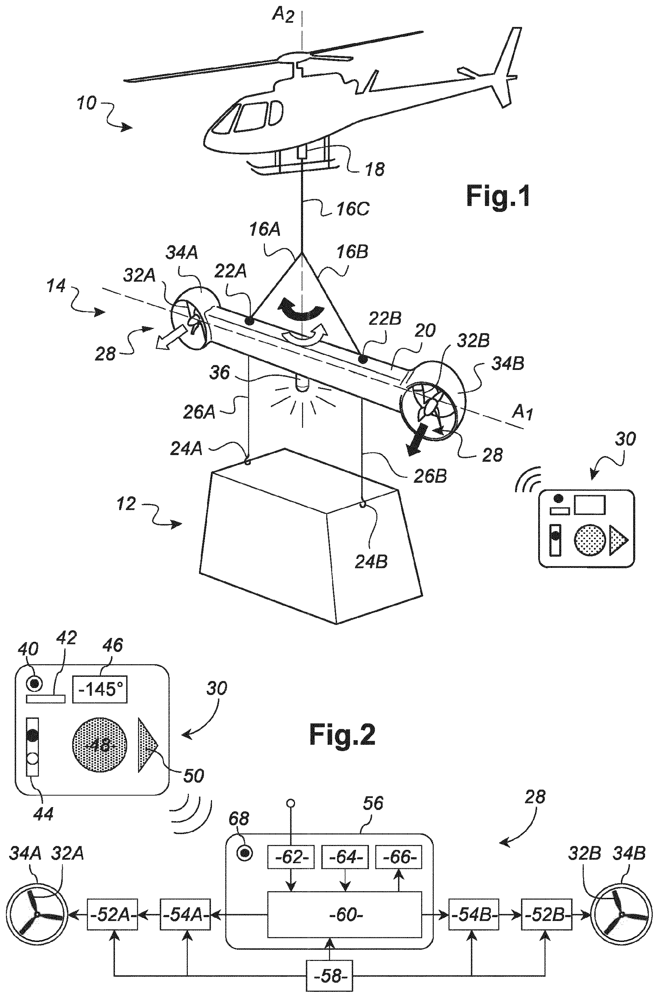

L'installation représentée schématiquement sur la figure 1 comporte un engin de levage et de déplacement 10, par exemple un hélicoptère, une charge 12, par exemple un tronçon de pylône pour lignes de transport d'électricité à haute tension par câble, et un dispositif anti-giratoire 14 de suspension de cette charge 12 sous l'engin de levage et de déplacement 10.

Le dispositif anti-giratoire 14 comporte un système d'élingue 16A, 16B, 16C doté d'un élément 18 de fixation à l'hélicoptère 10, par exemple un émerillon 18. Il comporte en outre une poutre d'écartement 20, présentant un axe longitudinal principal A₁ et un axe transversal de rotation en lacet A₂. La poutre d'écartement 20 comporte elle-même un premier système 22A, 22B de fixation supérieure au système d'élingue 16A, 16B, 16C et un deuxième système 24A, 24B de fixation inférieure au tronçon de pylône 12.

Le premier système 22A, 22B de fixation supérieure est plus précisément conçu pour permettre à la poutre d'écartement 20 d'être suspendue en disposition essentiellement horizontale de son axe longitudinal principal A₁ et libre autour de son axe transversal vertical de rotation en lacet A₂ sous l'hélicoptère 10 à l'aide du système d'élingue 16A, 16B, 16C : il s'agit ainsi par exemple d'un système à deux crochets de fixation 22A et 22B disposés en partie supérieure de la poutre d'écartement 20 et équidistants de l'axe transversal de rotation en lacet A₂ de part et d'autre de ce dernier. Ils sont respectivement accrochés à deux extrémités de deux élingues 16A et 16B du système d'élingue, ces élingues 16A et 16B étant de même longueur et se rejoignant à une extrémité d'une troisième élingue principale 16C dont l'autre extrémité est fixée à l'émerillon 18 sous l'hélicoptère 10. L'horizontalité de la poutre d'écartement 20 est ainsi assurée par la longueur commune des deux élingues 16A et 16B et par l'équidistance des deux crochets 22A et 22B à l'axe A₂. La liberté de rotation autour de l'axe A₂ est permise grâce à l'émerillon 18. Pour une question de sécurité, les élingues 16A, 16B et 16C sont avantageusement dimensionnées pour assurer une hauteur d'au moins 20 mètres entre le point de fixation à l'hélicoptère 10 et la poutre d'écartement 20, par exemple 30 mètres +/-10%. Mais d'une façon générale, le dimensionnement des élingues 16A, 16B et 16C dépend de la configuration du terrain, donc de chaque situation. On notera que de nombreuses configurations sont possibles pour le système d'élingue et la disposition de l'émerillon 18. Ainsi, en variante, l'émerillon 18 pourrait être disposé à la jonction des trois élingues 16A, 16B, 16C. En variante également, seules deux élingues pourraient être utilisées, 16A et 16B, se rejoignant directement sous l'hélicoptère 10 au niveau de l'émerillon 18.

Le deuxième système 24A, 24B de fixation inférieure est plus précisément conçu pour permettre un accrochage avec entraînement du tronçon de pylône 12 par la poutre d'écartement 20 autour de son axe transversal de rotation en lacet A₂: il s'agit ainsi par exemple d'un système à deux crochets distants 24A et 24B dont l'ouverture et la fermeture sont activables électriquement pour un largage de la charge sur commande. Ils sont par exemple disposés en partie inférieure de la poutre d'écartement 20 et équidistants de l'axe transversal de rotation en lacet A₂ de part et d'autre de ce dernier, notamment pour assurer un certain équilibre de l'ensemble anti-giratoire. Comme illustré sur la figure 1, ils peuvent en outre être élingués, par exemple sur 10 mètres +/- 10% de hauteur à l'aide de deux élingues 26A et 26B s'étendant verticalement parallèlement à l'axe A₂, pour faciliter l'accrochage du tronçon de pylône 12 lorsque l'environnement ne permet pas de descendre complètement la poutre d'écartement 20 au sol. Mais là encore, le dimensionnement des élingues 26A et 26B dépend de la configuration du terrain, donc de chaque situation. Des câbles électriques peuvent courir le long des élingues 16C, 16A, 16B, 26A, 26B depuis l'hélicoptère 10 jusqu'aux deux crochets électriques 24A et 24B pour assurer la possibilité d'actionnement en ouverture et fermeture de ces derniers par le pilote. Ils sont même souvent indispensables pour des questions de sécurité. Par sécurité également, ces câbles sont intégrés dans des fourreaux à l'intérieur des élingues parce qu'il est très important de les protéger contre tout endommagement.

Conformément à un principe général de la présente invention, la poutre d'écartement 20 comporte en outre des moyens de propulsion 28 disposés de manière à engager sa rotation sur commande, à l'aide d'une commande distante 30 ou par programmation, sélectivement dans un sens ou dans l'autre, autour de son axe transversal de rotation en lacet A₂ lorsqu'elle est suspendue à l'hélicoptère 10 via le système d'élingue 16A, 16B, 16C. Ils comportent plus précisément des hélices motorisées disposées aux deux extrémités longitudinales de la poutre d'écartement 20. Au moins une première hélice 32A est ainsi disposée à une première extrémité de la poutre d'écartement 20, du même côté que les crochets 22A et 24A par rapport à l'axe A₂. Elle est plus précisément disposée dans un premier conduit de carénage 34A de forme essentiellement cylindrique autour d'un axe orthogonal aux axes A₁ et A₂. Elle est activable selon une première rotation permettant une rotation de la poutre d'écartement 20 dans un premier sens anti-horaire de rotation en lacet. Au moins une deuxième hélice 32B est également disposée à une deuxième extrémité de la poutre d'écartement 20, du même côté que les crochets 22B et 24B par rapport à l'axe A₂. Elle est plus précisément disposée dans un deuxième conduit de carénage 34B de forme essentiellement cylindrique autour d'un axe orthogonal aux axes A₁ et A₂. Elle est activable selon une deuxième rotation permettant une rotation de la poutre d'écartement 20 dans un deuxième sens horaire de rotation en lacet. Les conduits de carénage 34A, 34B remplissent une première fonction de guidage et optimisation de la propulsion par augmentation de son rendement énergétique. Ils remplissent en outre une fonction de protection des hélices 32A, 32B ou des opérateurs au sol, cette deuxième fonction pouvant être avantageusement renforcée par la présence de grilles en entrées et sorties de ces conduits : cela réduit le risque de collisions entre corps étrangers et hélices ou de blessures d'opérateurs susceptibles de s'approcher des hélices en rotation.

Enfin, la poutre d'écartement 20 est pourvue d'un indicateur visuel 36 à plusieurs états visuels différents, par exemple plusieurs couleurs différentes, indiquant un état de fonctionnement d'un asservissement angulaire en lacet de la poutre d'écartement 20 parmi plusieurs états de fonctionnement différents possibles. De façon optionnelle mais avantageuse, au moins trois états de fonctionnement sont prévus :
- un état dans lequel l'asservissement angulaire en lacet de la poutre d'écartement 20 n'est pas activé : l'indicateur visuel 36 peut indiquer cet état par la couleur rouge,
- un état dans lequel l'asservissement angulaire en lacet de la poutre d'écartement 20 est activé mais en attente d'une consigne angulaire d'asservissement : l'indicateur visuel 36 peut indiquer cet état par la couleur orange, et
- un état dans lequel l'asservissement angulaire en lacet de la poutre d'écartement 20 est activé et soumis à une consigne angulaire reçue : l'indicateur visuel 36 peut indiquer cet état par la couleur verte.

Les moyens de propulsion 28 de la poutre d'écartement 20 ainsi que la commande distante 30 vont maintenant être détaillés en référence à la figure 2.

Selon un premier mode de réalisation possible, la commande distante 30 comporte :
- un interrupteur 40 de mise sous tension,
- un indicateur 42 de niveau de charge d'une batterie d'alimentation en énergie électrique (par exemple sous la forme d'un bargraphe),
- un sélecteur de mode 44, entre un premier mode d'asservissement de l'orientation de la poutre 20 en lacet par rapport à un référentiel angulaire lié à l'hélicoptère 10 et un deuxième mode d'asservissement de l'orientation de la poutre 20 en lacet par rapport à un référentiel angulaire lié au sol,
- un écran 46 d'affichage d'un angle de consigne α_{C},
- une molette 48 de réglage de l'angle de consigne α_{C} affiché sur l'écran 46, et
- un interrupteur 50 de contrôle d'asservissement, pour activer ou désactiver un asservissement angulaire en lacet de la poutre d'écartement 20 par rapport à l'angle de consigne α_{C} affiché.

Une telle commande 30 peut être mise à la disposition du pilote ou d'un copilote de l'hélicoptère 10, qui a le choix entre les premier et deuxième modes d'asservissement selon qu'il charge, transporte ou dépose le tronçon de pylône 12, ou même transporte la poutre d'écartement 20 à vide.

Selon une variante simplifiée, la commande 30 peut ne pas comporter de sélecteur de mode 44 et fonctionner uniquement selon le deuxième mode d'asservissement. Une telle commande simplifiée peut être mise à la disposition d'un opérateur au sol.

Les moyens de propulsion 28 illustrés fonctionnellement sur la figure 2 sont intégrés dans la poutre d'écartement 20. Ils comportent la première hélice 32A intégrée dans son conduit de carénage 34A, un premier moteur 52A d'entraînement de la première hélice 32A et un premier variateur 54A commandant la puissance du premier moteur 52A. Ils comportent en outre la deuxième hélice 32B intégrée dans son conduit de carénage 34B, un deuxième moteur 52B d'entraînement de la deuxième hélice 32B et un deuxième variateur 54B commandant la puissance du deuxième moteur 52B. Ils comportent enfin un boîtier de commande électronique 56 conçu pour commander les premier et deuxième variateurs 54A, 54B. Le boîtier de commande électronique 56, les variateurs 54A, 54B et les moteurs 52A, 52B sont alimentés en énergie électrique par une ou plusieurs batteries 58 elles aussi intégrées dans la poutre d'écartement 20.

Le boîtier de commande électronique 56 comporte plus précisément un microcontrôleur 60 programmé pour commander les premier et deuxième variateurs 54A, 54B. Il comporte en outre un récepteur 62 de signaux hertziens émis par la commande distante 30, ce récepteur 62 étant connecté au microcontrôleur 60 pour lui fournir un signal d'asservissement, l'angle de consigne α_{C} et, le cas échéant, l'orientation en lacet de l'axe longitudinal de l'hélicoptère 10 par rapport à un référentiel lié au sol. Cette orientation sera notée α_{H}. Il comporte en outre un compas électronique 64 permettant de connaître à chaque instant l'orientation en lacet de l'axe longitudinal A₁ de la poutre d'écartement 20 par rapport à un référentiel lié au sol. Cette orientation sera notée α_{P}. Il comporte en outre un indicateur 66 de niveau de charge de la ou des batteries 58. Enfin, il comporte un interrupteur 68 de mise sous tension.

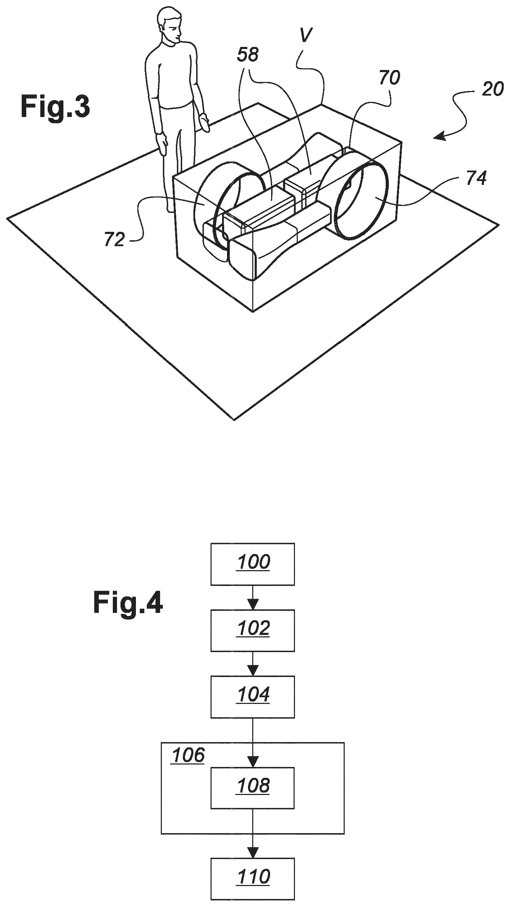

Comme illustré sur la figure 3, la poutre d'écartement 20 est avantageusement conçue en trois portions destinées à s'étendre longitudinalement le long de l'axe principal A₁ lorsqu'elle est montée et opérationnelle. Une portion centrale 70 comporte les moyens d'alimentation en énergie électrique des moyens de propulsion 28, c'est-à-dire la ou les batteries 58. Deux batteries 58 sont illustrées sur la figure 3 et sont par exemple montées sur rails de guidage, avec trappes d'accès et dispositifs de verrouillage en position, dans la portion centrale 70 pour une manipulation simplifiée d'installation ou de remplacement. Elles sont également ainsi protégées contre les chocs et l'environnement. La portion centrale 70 peut en outre comporter le boîtier de commande électronique 56 dont l'indicateur 66 de niveau de charge peut rester visible en surface. Une première portion latérale 72 est par exemple fixée par liaison pivot avec la portion centrale 70 à l'aide d'une charnière, de manière à pouvoir être escamotée contre cette dernière en configuration de rangement. Elle comporte par exemple le premier variateur 54A, le premier moteur 52A et la première hélice 32A dans son conduit de carénage 34A. En variante la première portion latérale pourrait être conçue pour être complètement désolidarisable de la portion centrale 70. Une deuxième portion latérale 74 est également par exemple fixée par liaison pivot avec la portion centrale 70 à l'aide d'une charnière, de manière à pouvoir être escamotée contre cette dernière en configuration de rangement. Elle comporte par exemple le deuxième variateur 54B, le deuxième moteur 52B et la deuxième hélice 32B dans son conduit de carénage 34B. En variante la deuxième portion latérale pourrait également être conçue pour être complètement désolidarisable de la portion centrale 70.

Comme le montre clairement la figure 3, cette configuration de la poutre d'écartement 20 lui permet d'être rangée dans un volume V très compact, par exemple dans l'hélicoptère 10, avant d'être montée au sol pour être ensuite utilisée. Etant donné la longueur optimale d'une telle poutre d'écartement 20 en utilisation pour le montage de pylônes porteurs de lignes électriques, de l'ordre de plusieurs mètres, par exemple environ 5 mètres, cette configuration en trois portions escamotables est réellement avantageuse.

La figure 4 illustre les étapes successives d'un procédé de levage et de déplacement d'une charge, par exemple le tronçon de pylône 12, à l'aide du dispositif anti-giratoire 14 décrit précédemment.

Au cours d'une étape préalable 100, la poutre d'écartement 20 est amenée, par exemple par hélicoptère 10, et montée sur le lieu de levage du tronçon de pylône 12. Elle est mise sous tension par actionnement de son interrupteur 68 et son niveau de charge en batterie visible sur l'indicateur 66 peut alors être vérifié. Le système d'élingue 16A, 16B, 16C est fixé à la poutre d'écartement 20 grâce aux crochets 22A et 22B pour former le dispositif anti-giratoire 14.

Au cours d'une étape 102, le système d'élingue 16A, 16B, 16C est fixé à l'hélicoptère 10, par exemple à l'aide de l'émerillon 18.

Au cours d'une étape 104, le dispositif anti-giratoire 14 est fixé au tronçon de pylône 12 grâce aux crochets électriques 24A et 24B éventuellement élingués.

Ensuite, au cours d'une étape 106 d'élévation et de déplacement de la charge, l'hélicoptère 10 transporte le tronçon de pylône 12 vers une zone de dépôt pour le poser au sol ou sur un autre tronçon de pylône dans cette zone. Pendant cette étape, les moyens de propulsion 28 de la poutre d'écartement 20 peuvent être commandés (étape 108), à l'aide de la commande distante 30 ou par programmation, pour maintenir la poutre d'écartement 20 dans une direction de consigne définie autour de l'axe transversal de rotation en lacet par rapport à un référentiel lié, soit à l'hélicoptère 10, soit au sol. Par exemple, en phase de levage du tronçon de pylône, les moyens de propulsion 28 peuvent être commandés pour maintenir la poutre d'écartement 20 dans la direction qu'elle présentait au sol, de manière à empêcher le tronçon de pylône 12 de tourner sur lui-même autour de l'axe A₂ ; en phase de transport du tronçon de pylône 12, ou en phase de transport de la poutre d'écartement 20 à vide le cas échéant, les moyens de propulsion 28 peuvent être commandés pour maintenir la poutre d'écartement 20 dans l'axe longitudinal de l'hélicoptère 10 et diminuer ainsi sa portance ; en phase de dépose du tronçon de pylône 12 au sol ou sur un autre tronçon de pylône, les moyens de propulsion 28 peuvent être commandés pour orienter la poutre d'écartement 20 et le tronçon de pylône 12 dans la bonne direction de pose.

Enfin, au cours d'une dernière étape 110, le tronçon de pylône 12 est déposé selon l'orientation souhaitée par largage en activant à distance l'ouverture des crochets électriques 24A et 24B.

Les étapes 104 à 110 qui viennent d'être décrites peuvent être répétées pour le montage complet d'un pylône constitué de plusieurs tronçons. Elles s'inscrivent avantageusement dans une procédure conventionnelle de montage de pylône, réalisée à partir d'une plateforme d'assemblage pour un montage sur une zone de dépose.

Compte tenu des charges à porter et des exigences de sécurité pour tout levage et déplacement par hélicoptère dans ce type de procédure, les contraintes suivantes peuvent avantageusement être respectées :
- choix de matériaux composites à fibre de carbone pour l'armature de la poutre d'écartement 20 et ses conduits de carénage 34A, 34B, éventuellement même également pour les hélices 32A, 32B, pour un ensemble anti-giratoire n'excédant pas 5 mètres de long, 150 kg et pouvant porter jusqu'à 4,5 tonnes de charge en statique et 19 tonnes en dynamique,
- choix de moteurs 52A, 52B de puissance proche de 15 kW ou supérieure, pour un poids inférieur à 2 kg chacun, permettant une poussée de plus de 400 Newton en couplage avec les hélices 32A, 32B,
- choix d'hélices 32A, 32B pouvant tourner de 4000 à 6000 tours/mn, auquel cas le sens de rotation de telles hélices ne peut pas être inversé : cela ne pose pas de problème à condition que les hélices soient actionnées alternativement et jamais ensemble,
- choix de batteries présentant au moins 5 heures d'autonomie en asservissement, supportant une tension totale de 48 V et une capacité en charge de 100 A.h : deux batteries de 24 V chacune, de type Li-Fe-Po et dont le poids total est d'environ 50 kg, montées en série, peuvent convenir.

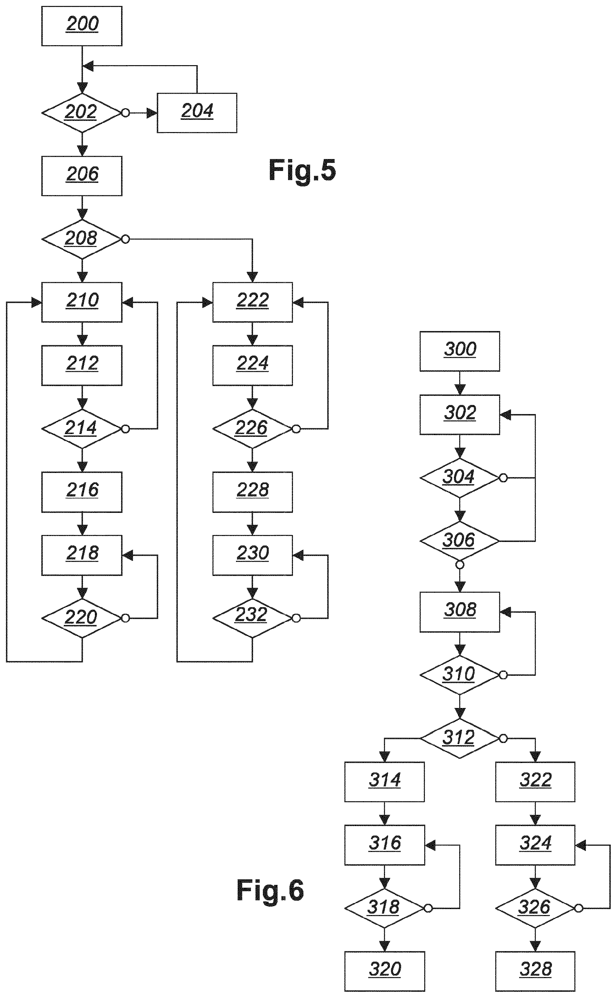

Le fonctionnement de la commande distante 30, dans sa variante incluant le sélecteur de mode 44, va maintenant être détaillé en référence à l'organigramme de la figure 5.

Au cours d'une première étape 200, cette commande distante 30 est confiée au pilote ou à un copilote de l'hélicoptère 10. Elle dispose d'un voyant principal indiquant sa mise sous tension et d'un voyant de contrôle indiquant l'activation ou la désactivation de l'asservissement angulaire. Ces voyants sont pour l'instant éteints.

L'étape 202 suivante est une étape d'attente de la mise sous tension de la commande distante 30 à l'aide de l'interrupteur 40. Tant qu'elle reste hors tension, le voyant principal reste éteint et l'alimentation générale est coupée (étape 204). Dès que le pilote ou copilote agit sur l'interrupteur 40, la commande distante 30 se met sous tension, son voyant principal s'allume, l'indicateur 42 de niveau de charge s'active et un signal d'information de mise sous tension est transmis au récepteur 62 du boîtier de commande électronique (étape 206).

Après mise sous tension, l'état du sélecteur de mode 44 est testé au cours d'une étape 208. Si le sélecteur de mode 44 est sur le premier mode d'asservissement de la poutre 20 en lacet par rapport à un référentiel angulaire lié à l'hélicoptère 10, on passe à une série d'étapes 210 à 220. Si le sélecteur de mode 44 est sur le deuxième mode d'asservissement de la poutre 20 en lacet par rapport à un référentiel angulaire lié au sol, on passe à une série d'étapes 222 à 232.

L'étape 210 est une étape d'indication que la commande distante 30 est en attente d'une consigne d'asservissement angulaire. Cela peut se faire à l'aide d'un message prédéterminé, par exemple « STBY », sur l'écran d'affichage 46.

L'étape 212 est une étape d'action sur le voyant de contrôle pour qu'il indique la désactivation de l'asservissement angulaire. Le voyant de contrôle est ainsi par exemple de couleur rouge.

L'étape 214 suivante est une étape d'attente d'action sur l'interrupteur 50 de contrôle d'asservissement. Tant que le pilote ou copilote n'agit pas sur cet interrupteur 50, on reste sur les étapes 210 et 212. Dès que l'asservissement angulaire est activé par action sur l'interrupteur 50, on passe à une étape 216 d'action sur le voyant de contrôle pour qu'il indique l'activation de l'asservissement angulaire. Le voyant de contrôle passe ainsi par exemple à la couleur verte et l'angle de consigne α_{C} affiché sur l'écran 46 est initialisé à zéro. Un signal d'information d'activation de l'asservissement angulaire est en outre transmis au récepteur 62 du boîtier de commande électronique 56.

L'étape 218 suivante est une étape d'action possible sur la molette 48 pour régler une valeur d'angle de consigne α_{C} souhaitée, par exemple entre -180 et +180 degrés par rapport à l'angle nul initialisé à l'étape 216. Tant que l'asservissement est activé (voyant de contrôle vert), la valeur d'angle de consigne α_{C} choisie est régulièrement transmise au récepteur 62 du boîtier de commande électronique avec l'orientation angulaire α_{H} de l'hélicoptère 10 par rapport à un référentiel angulaire lié au sol. Il est ainsi possible de changer l'angle de consigne α_{C} aussi souvent que souhaité. On notera que cette étape sollicite un compas électronique embarqué dans l'hélicoptère 10 pour connaître son orientation α_{H}.

Enfin, l'étape 220 est une étape d'attente d'action sur l'interrupteur 50 de contrôle d'asservissement. Tant que le pilote ou copilote n'agit pas de nouveau sur cet interrupteur 50, on reste sur l'étape 218 : par exemple pendant tout le déroulement d'une étape de transport et de pose d'un tronçon de pylône. Dès que l'asservissement angulaire est désactivé par action sur l'interrupteur 50, par exemple une fois que le tronçon de pylône 12 est déposé comme souhaité, on retourne à l'étape 210 : l'affichage sur l'écran 46 repasse ainsi à l'indication « STBY » et le voyant de contrôle repasse à la couleur rouge.

Les étapes 222 à 232 sont respectivement identiques aux étapes 210 à 220 à l'exception de l'étape 230 qui ne comporte pas la transmission de l'orientation angulaire α_{H} de l'hélicoptère 10 par rapport à un référentiel angulaire lié au sol.

Bien évidemment, le fonctionnement de la commande distante 30 peut être aisément simplifié sur la base de ce qui a été détaillé ci-dessus si elle ne comporte pas de sélecteur de mode pour une utilisation par un opérateur au sol.

Le fonctionnement du microcontrôleur 60 du boîtier de commande 56 du dispositif anti-giratoire 14 va maintenant être détaillé en référence à l'organigramme de la figure 6. Ce fonctionnement permet l'utilisation de plusieurs commandes distantes 30, avec ou sans sélecteur de mode.

Au cours d'une première étape 300, le boîtier de commande électronique 56 est mis sous tension par action sur l'interrupteur 68. Cette action déclenche le passage au rouge de l'indicateur visuel 36 (étape 302) et l'indication du niveau de charge des batteries 58 sur l'indicateur 66.

Ensuite, au cours d'une étape de test 304, le microcontrôleur 60 exécute une recherche pour vérifier si au moins une commande distante 30 est sous tension. Si ce n'est pas le cas, on repasse à l'étape 302.

Si au moins une commande distante 30 est sous tension, on passe à une autre étape de test 306 au cours de laquelle le microcontrôleur 60 exécute une recherche pour vérifier si au moins deux commandes distantes 30 sont sous tension. Si c'est le cas, on repasse à l'étape 302, le microcontrôleur 60 n'acceptant pas l'utilisation simultanée de deux commandes distantes activées ou plus.

Si une et une seule commande distante 30 est sous tension, on passe à une étape 308 de passage à l'orange de l'indicateur visuel 36.

L'étape 310 suivante est une étape d'attente de réception d'une consigne angulaire d'asservissement. Tant que l'asservissement angulaire de la poutre d'écartement 20 n'est pas activé par action sur l'interrupteur 50 d'une commande distante 30, le microcontrôleur 60 boucle sur les l'étape 308 et 310.

Lorsque le récepteur 62 reçoit un signal d'information indiquant l'activation de l'asservissement angulaire, l'indicateur visuel 36 passe au vert et on passe à une nouvelle étape de test 312.

Au cours de cette étape 312, le microcontrôleur 60 vérifie si le récepteur 62 reçoit la valeur d'angle de consigne α_{C} seule ou accompagnée de l'orientation angulaire α_{H} de l'hélicoptère 10.

Si le récepteur 62 reçoit les deux valeurs angulaires α_{C} et α_{H}, alors cela signifie que l'unique commande distante 30 activée est sur le premier mode d'asservissement de la poutre 20 en lacet par rapport à un référentiel angulaire lié à l'hélicoptère 10 et le microcontrôleur 60 passe à l'exécution d'une série d'étapes 314 à 320. Si le récepteur 62 ne reçoit que la valeur d'angle de consigne α_{C}, alors cela signifie que l'unique commande distante 30 activée est sur le deuxième mode d'asservissement de la poutre 20 en lacet par rapport à un référentiel angulaire lié au sol et le microcontrôleur 60 passe à l'exécution d'une série d'étapes 322 à 328.

Lors de l'étape 314, le microcontrôleur 60 passe lui aussi dans le premier mode d'asservissement de la poutre 20 en lacet par rapport à un référentiel angulaire lié à l'hélicoptère 10.

En conséquence, il exécute le calcul suivant au cours de l'étape 316 :
Δ = α_{P} - (α_{H} - α_{C}), avec α_{P} la valeur angulaire fournie par le compas électronique 64.

Ensuite, au cours de l'étape de test 318, le microcontrôleur 60 compare le résultat de son calcul Δ à une valeur seuil prédéterminée de tolérance angulaire, par exemple 5 degrés. Tant que Δ reste inférieur à cette valeur seuil, on revient à l'étape 316.

Dès que Δ dépasse la valeur seuil, le microcontrôleur 60 passe à l'étape 320 d'actionnement de l'une des deux hélices 32A et 32B pour un replacement de la poutre d'écartement 20 dans une orientation α_{P} aussi proche que possible de α_{H} - α_{C}.

Lors de l'étape 322, le microcontrôleur 60 passe dans le deuxième mode d'asservissement de la poutre 20 en lacet par rapport à un référentiel angulaire lié au sol.

En conséquence, il exécute le calcul suivant au cours de l'étape 324 :
Δ = α_{P} - α_{C}, avec α_{P} la valeur angulaire fournie par le compas électronique 64.

Ensuite, au cours de l'étape de test 326, le microcontrôleur 60 compare le résultat de son calcul Δ à la valeur seuil prédéterminée de tolérance angulaire. Tant que Δ reste inférieur à cette valeur seuil, on revient à l'étape 324.

Dès que Δ dépasse la valeur seuil, le microcontrôleur 60 passe à l'étape 328 d'actionnement de l'une des deux hélices 32A et 32B pour un replacement de la poutre d'écartement 20 dans une orientation α_{P} aussi proche que possible de α_{C}.

Les étapes 320 et 328 peuvent être suivies d'un retour respectif aux étapes 316 et 324, sachant en outre qu'à tout moment, le pilote, le copilote ou l'opérateur au sol peut changer l'angle de consigne α_{C} à l'aide de la molette 48.

Par ailleurs, à tout moment entre les étapes 312 à 320 ou 328, toute action sur l'interrupteur 50 de la commande distante 30 activée provoque un retour du microcontrôleur 60 à l'étape 308. De même, toute action sur l'interrupteur 40 de l'une quelconque des commandes distantes 30 entre les étapes 308 et 320 ou 328 provoque un retour du microcontrôleur 60 à l'étape 302.

Il apparaît clairement qu'un dispositif anti-giratoire tel que celui décrit précédemment permet de contrôler la rotation en lacet sur elle-même d'une charge à partir d'un point unique d'accrochage sur un engin de levage et de déplacement de cette charge, sans transmission des moments engendrés par la charge. Le dispositif est en outre simple de conception, de réglage, d'utilisation et d'entretien. Il permet de plus, grâce aux crochets électriques 24A, 24B, un largage automatique en urgence pour plus de sécurité. Il est également relativement léger, autonome en consommation d'énergie électrique et actionnable à distance depuis l'engin de levage et déplacement ou depuis le sol. Aucune présence humaine n'est donc nécessaire à proximité de la charge. Il est enfin facile à concevoir pour ne pas perturber les dispositifs électriques d'un engin porteur tel qu'un hélicoptère.

On notera par ailleurs que l'invention n'est pas limitée au mode de réalisation et aux variantes décrits précédemment.

En particulier, il a été détaillé un mode de réalisation selon lequel les moyens de propulsion 28 sont actionnés à l'aide d'une ou plusieurs commandes distantes 30. Mais un autre mode de réalisation pourrait prévoir un enregistrement préalable d'un ou plusieurs angles de consigne α_{C}, par exemple sous forme de coordonnées GPS (de l'anglais « Global Positioning System »), directement dans le microcontrôleur 60. Dans ce cas la commande des moyens de propulsion 28 est envisageable au moins en partie par programmation.

Il apparaîtra plus généralement à l'homme de l'art que diverses modifications peuvent être apportées aux modes de réalisation décrits ci-dessus, à la lumière de l'enseignement qui vient de lui être divulgué. Dans les revendications qui suivent, les termes utilisés ne doivent pas être interprétés comme limitant les revendications aux modes de réalisation exposés dans la présente description, mais doivent être interprétés pour y inclure tous les équivalents que les revendications visent à couvrir du fait de leur formulation et dont la prévision est à la portée de l'homme de l'art en appliquant ses connaissances générales à la mise en oeuvre de l'enseignement qui vient de lui être divulgué.

## Revendications

1. Dispositif anti-giratoire (14) de suspension d'une charge (12) sous un engin (10) de levage et de déplacement de cette charge (12), comportant un système d'élingue (16A, 16B, 16C) doté d'un élément (18) de fixation à l'engin de levage et de déplacement (10), ainsi qu'une poutre d'écartement (20), présentant un axe longitudinal principal (A₁) et un axe transversal (A₂) de rotation en lacet, comprenant :
- un système (22A, 22B) de fixation supérieure au système d'élingue (16A, 16B, 16C), conçu pour lui permettre d'être suspendue en disposition essentiellement horizontale de son axe longitudinal principal (A₁) et libre autour de son axe transversal (A₂) de rotation en lacet sous l'engin de levage et de déplacement (10) à l'aide du système d'élingue (16A, 16B, 16C),
- un système (24A, 24B, 26A, 26B) de fixation inférieure à la charge (12), conçu pour permettre un entraînement de la charge (12) par la poutre d'écartement (20) autour de son axe transversal (A₂) de rotation en lacet,
la poutre d'écartement (20) comportant des moyens de propulsion (28) disposés de manière à engager sa rotation sur commande, sélectivement dans un sens ou dans l'autre, autour de son axe transversal (A₂) de rotation en lacet lorsqu'elle est suspendue à l'engin de levage et de déplacement (10) via le système d'élingue (16A, 16B, 16C),
**caractérisé en ce que** la poutre d'écartement (20) est pourvue d'un indicateur visuel (36) à au moins trois états visuels différents indiquant un état de fonctionnement d'un asservissement angulaire en lacet de la poutre d'écartement (20) parmi au moins trois états de fonctionnement différents possibles :
- un état dans lequel l'asservissement angulaire en lacet de la poutre d'écartement (20) n'est pas activé,
- un état dans lequel l'asservissement angulaire en lacet de la poutre d'écartement (20) est activé mais en attente d'une consigne angulaire d'asservissement, et
- un état dans lequel l'asservissement angulaire en lacet de la poutre d'écartement (20) est activé et soumis à une consigne angulaire reçue.

2. Dispositif anti-giratoire (14) de suspension selon la revendication 1, dans lequel les moyens de propulsion (28) comportent un système d'hélices motorisées (32A, 52A, 32B, 52B) disposées aux extrémités longitudinales de la poutre d'écartement (20).

3. Dispositif anti-giratoire (14) de suspension selon la revendication 2, dans lequel :
- une première hélice (32A) des moyens de propulsion (28), disposée à une première extrémité de la poutre d'écartement (20), est activable selon une première rotation, comprise entre 4000 et 6000 tours/mn, permettant une rotation de la poutre d'écartement (20) selon un premier sens de rotation en lacet, et
- une deuxième hélice (32B) des moyens de propulsion (28), disposée à une deuxième extrémité de la poutre d'écartement (20), est activable selon une deuxième rotation, comprise entre 4000 et 6000 tours/mn, permettant une rotation de la poutre d'écartement (20) selon un deuxième sens de rotation en lacet opposé au premier sens.

4. Dispositif anti-giratoire (14) de suspension selon la revendication 2 ou 3, dans lequel chaque hélice (32A, 32B) des moyens de propulsion (28) est disposée dans un conduit de carénage (34A, 34B) essentiellement cylindrique autour d'un axe orthogonal à l'axe longitudinal principal (A₁) et à l'axe transversal (A₂) de rotation en lacet de la poutre d'écartement (20).

5. Dispositif anti-giratoire (14) de suspension selon la revendication 4, dans lequel une grille de protection est disposée en entrée et en sortie de chaque conduit de carénage (34A, 34B).

6. Dispositif anti-giratoire (14) de suspension selon l'une quelconque des revendications 1 à 5, dans lequel une élingue principale (16C) du système d'élingue (16A, 16B, 16C), destinée à porter l'axe transversal (A₂) de rotation en lacet de la poutre d'écartement (20), comporte un émerillon (18) de raccordement, à l'engin de levage et de déplacement (10) ou à la poutre d'écartement (20), à l'une de ses extrémités.

7. Procédé de levage et de déplacement d'une charge (12) à l'aide d'un dispositif anti-giratoire (14) de suspension selon l'une quelconque des revendications 1 à 6, comportant les étapes suivantes :
- fixation (102) du système d'élingue (16A, 16B, 16C) du dispositif anti-giratoire (14) de suspension à l'engin de levage et de déplacement (10),
- fixation (104) du dispositif anti-giratoire (14) de suspension à la charge (12),
- élévation et déplacement (106) de la charge (12) vers une zone de dépôt à l'aide de l'engin de levage et de déplacement (10), et
- pendant l'étape (106) d'élévation et de déplacement de la charge (12), commande (108) des moyens de propulsion (28) de la poutre d'écartement (20) de manière à la maintenir dans une direction de consigne définie autour de l'axe transversal (A₂) de rotation en lacet par rapport à un référentiel lié, soit à l'engin de levage et de déplacement (10), soit au sol.

8. Procédé de levage et de déplacement d'une charge (12) selon la revendication 7, dans lequel la charge (12) est un tronçon de pylône pour lignes de transport d'électricité par câble et l'engin de levage et de déplacement (10) est un hélicoptère porteur du système d'élingue (16A, 16B, 16C).

## Patentansprüche

1. Verdrehsicherungsvorrichtung (14) zur Aufhängung einer Last (12) unter einem Gerät (10) zum Heben und Bewegen dieser Last (12), die ein Schlingensystem (16A, 16B, 16C) mit einem Element (18) zur Befestigung am Hebe- und Bewegegerät (10) sowie einen Abstandsträger (20) aufweist, der eine Hauptlängsachse (A₁) und eine Querachse (A₂) der Gierdrehung aufweist, umfassend:
- ein System (22A, 22B) zur oberen Befestigung am Schlingensystem (16A, 16B, 16C), das so ausgelegt ist, dass es mithilfe des Schlingensystems (16A, 16B, 16C) im Wesentlichen horizontaler Anordnung seiner Hauptlängsachse (A₁) und frei um seine Querachse (A₂) der Gierdrehung unter dem Hebe- und Bewegegerät (10) gehängt werden kann,
- ein System (24A, 24B, 26A, 26B) zur unteren Befestigung an der Last (12), das so ausgelegt ist, dass es einen Antrieb der Last (12) durch den Abstandträger (20) um seine Querachse (A₂) der Gierdrehung ermöglicht,
wobei der Abstandsträger (20) Antriebsmittel (28) aufweist, die so angeordnet sind, dass ihre Drehung auf Befehl, selektiv in eine oder andere Richtung, um ihre Querachse (A₂)der Gierdrehung eingeleitet wird, wenn sie über das Schlingensystem (16A, 16B, 16C) an dem Hebe- und Bewegegerät (10) aufgehängt ist,
**dadurch gekennzeichnet, dass** der Abstandsträger (20) mit einer visuellen Anzeige (36) in mindestens drei unterschiedlichen visuellen Zuständen versehen ist, die einen Betriebszustand einer Gierwinkelregelung des Abstandsträgers (20) aus mindestens drei verschiedenen möglichen Betriebszuständen angibt:
- einen Zustand, in dem die Gierwinkelregelung des Abstandsträgers (20) nicht aktiviert ist,
- einen Zustand, in dem die Gierwinkelregelung des Abstandsträgers (20) aktiviert ist, aber auf einen Regelungswinkelsollwert wartet, und
- einen Zustand, in dem die Gierwinkelregelung des Abstandsträgers (20) aktiviert ist und einem empfangenen Winkelsollwert unterliegt.

2. Verdrehsicherungsvorrichtung (14) zur Aufhängung nach Anspruch 1, wobei die Antriebsmittel (28) ein System motorisierter Propeller (32A, 52A, 32B, 52B) aufweisen, die an den Längsenden des Abstandsträgers (20) angeordnet sind.

3. Verdrehsicherungsvorrichtung (14) zur Aufhängung nach Anspruch 2, wobei:
- ein erster Propeller (32A) der Antriebsmittel (28), der an einem ersten Ende des Abstandsträgers (20) angeordnet ist, in einer ersten Drehung zwischen 4000 und 6000 Umdrehungen/min aktivierbar ist, wodurch eine Drehung des Abstandsträgers (20) in einer ersten Gierdrehungsrichtung ermöglicht wird, und
- ein zweiter Propeller (32B) der Antriebsmittel (28), der an einem zweiten Ende des Abstandsträgers (20) angeordnet ist, in einer zweiten Drehung zwischen 4000 und 6000 Umdrehungen/min aktivierbar ist, wodurch eine Drehung des Abstandsträgers (20) in einer zweiten Gierdrehungsrichtung entgegengesetzt zur ersten Richtung ermöglicht wird.

4. Verdrehsicherungsvorrichtung (14) zur Aufhängung nach Anspruch 2 oder 3, wobei jeder Propeller (32A, 32B) der Antriebsmittel (28) in einem im Wesentlichen zylindrischen Verkleidungskanal (34A, 34B) um eine Achse orthogonal zu der Hauptlängsachse (A₁) und zu der Querachse (A₂) der Gierdrehung des Abstandsträgers (20) angeordnet ist.

5. Verdrehsicherungsvorrichtung (14) zur Aufhängung nach Anspruch 4, wobei am Eingang und Ausgang jedes Verkleidungskanals (34A, 34B) ein Schutzgitter angeordnet ist.

6. Verdrehsicherungsvorrichtung (14) zur Aufhängung nach einem der Ansprüche 1 bis 5, wobei eine Hauptschlinge (16C) des Schlingensystems (16A, 16B, 16C), zur Aufnahme der Querachse (A₂) der Gierdrehung des Abstandsträgers (20), an einem seiner Enden eine Drehverbindung (18) zum Hebe- und Bewegegerät (10) oder zum Abstandsträger (20) aufweist.

7. Verfahren zum Heben und Bewegen einer Last (12) mithilfe einer Verdrehsicherungsvorrichtung (14) zur Aufhängung nach einem der Ansprüche 1 bis 6, umfassend die folgenden Schritte:
- Befestigen (102) des Schlingensystems (16A, 16B, 16C) der Verdrehsicherungsvorrichtung (14) zur Aufhängung an dem Hebe- und Bewegegerät (10),
- Befestigen (104) der Verdrehsicherungsvorrichtung (14) zur Aufhängung an der Last (12),
- Heben und Bewegen (106) der Last (12) in einen Absetzbereich mithilfe des Hebe- und Bewegegeräts (10), und
- während des Schritts (106) des Hebens und Bewegens der Last (12), Steuern (108) der Antriebsmittel (28) des Abstandsträgers (20), sodass er in einer definierten Sollrichtung um die Querachse (A₂) der Gierdrehung in Bezug auf ein Bezugssystem gehalten wird, das entweder mit dem Hebe- und Bewegegerät (10) oder mit dem Boden verbunden ist.

8. Verfahren zum Heben und Bewegen einer Last (12) nach Anspruch 7, wobei die Last (12) ein Mastabschnitt für kabelgebundene Stromleitungen ist und das Hebe- und Bewegegerät (10) ein Hubschrauber ist, der das Schlingensystem (16A, 16B, 16C) trägt.

## Claims

1. An anti-rotation device (14) for suspending a load (12) under a machine (10) for lifting and moving this load (12), comprising a sling system (16A, 16B, 16C) provided with an element (18) for fastening to the lifting and moving machine (10), as well as a spreader beam (20), having a main longitudinal axis (A₁) and a yaw rotation transverse axis (A₂), comprising:
- a system (22A, 22B) for upper fastening to the sling system (16A, 16B, 16C), designed in order to allow it to be suspended in a substantially horizontal arrangement of its main longitudinal axis (A₁) and free about its yaw rotation transverse axis (A₂) beneath the lifting and moving machine (10) using the sling system (16A, 16B, 16C),
- a system (24A, 24B, 26A, 26B) for lower fastening to the load (12), designed in order to allow driving of the load (12) by the spreader beam (20) around its yaw rotation transverse axis (A₂),
the spreader beam (20) comprising propulsion means (28) disposed in such a way as to engage its rotation on command, selectively in one direction or the other, about its yaw rotation transverse axis (A₂) when it is suspended from the lifting and moving machine (10) via the sling system (16A, 16B, 16C),
**characterized in that** the spreader beam (20) is provided with a visual indicator (36) with at least three different visual states indicating an operating state of a yaw angular control of the spreader beam (20) out of at least three possible different operating states:
- a state in which the yaw angular control of the spreader beam (20) is not activated,
- a state in which the yaw angular control of the spreader beam (20) is activated but waiting for an angular control setting, and
- a state in which the yaw angular control of the spreader beam (20) is activated and subject to a received angular setting.

2. The suspension anti-rotation device (14) according to claim 1, wherein the propulsion means (28) comprise a system of motorized propellers (32A, 52A, 32B, 52B) disposed at the longitudinal ends of the spreader beam (20).

3. The suspension anti-rotation device (14) according to claim 2, wherein:
- a first propeller (32A) of the propulsion means (28), disposed at a first end of the spreader beam (20), can be activated according to a first rotation, comprised between 4000 and 6000 rpm, allowing a rotation of the spreader beam (20) in a first direction of yaw rotation, and
- a second propeller (32B) of the propulsion means (28), disposed at a second end of the spreader beam (20), can be activated according to a second rotation, comprised between 4000 and 6000 rpm, allowing a rotation of the spreader beam (20) in a second direction of yaw rotation opposite to the first direction.

4. The suspension anti-rotation device (14) according to claim 2 or 3, wherein each propeller (32A, 32B) of the propulsion means (28) is disposed in a substantially cylindrical fairing duct (34A, 34B) around an axis orthogonal to the main longitudinal axis (A₁) and to the yaw rotation transverse axis (A₂) of the spreader beam (20).

5. The suspension anti-rotation device (14) according to claim 4, wherein a protective grill is disposed at the inlet and at the outlet of each fairing duct (34A, 34B).

6. The suspension anti-rotation device (14) according to any one of claims 1 to 5, wherein a main sling (16C) of the sling system (16A, 16B, 16C), intended to carry the yaw rotation transverse axis (A₂) of the spreader beam (20), comprises a swivel (18) for connection, to the lifting and moving machine (10) or to the spreader beam (20), at one of its ends.

7. A method for lifting and moving a load (12) using a suspension anti-rotation device (14) according to any of claims 1 to 6, comprising the following steps:
- fastening (102) of the sling system (16A, 16B, 16C) of the suspension anti-rotation device (14) to the lifting and moving machine (10),
- fastening (104) of the suspension anti-rotation device (14) to the load (12),
- elevation and movement (106) of the load (12) towards a zone of deposition using the lifting and moving machine (10), and
- during the step (106) of elevation and of movement of the load (12), control (108) of the propulsion means (28) of the spreader beam (20) in such a way as to maintain it in a defined setting direction about the yaw rotation transverse axis (A₂) with respect to a reference frame linked either to the lifting and moving machine (10) or to the ground.

8. The method of lifting and moving a load (12) according to claim 7, wherein the load (12) is a section of pylon for lines for transporting electricity by cable and the lifting and moving machine (10) is a helicopter carrying the slinging system (16A, 16B, 16C).
